# EUROPEAN PATENT SPECIFICATION

(11) **EP 2 151 348 B1**
(45) Date of publication and mention of the grant of the patent: **22.05.2013**
(21) Application number: 09251948.7
(22) Date of filing: 06.08.2009
(51) Int. Cl.: B60N 2/04, B60R 5/04

(54) **Anti-racking sliding supports**
Gleitschutzstützen für Regallager
Supports coulissants anti-déchirement

(30) Priority: 07.08.2008 GB 0814485
(43) Date of publication of application: 10.02.2010
(73) Proprietor: Accuride International Limited, Northampton NN4 7AS (GB)
(72) Inventor: Herchenreder, Stefan, St. Neots, Cambridgeshire, PE19 8HJ (GB); Bayles, Peter, Northampton, Northamptonshire, NN4 9XF (GB); Craddock, Andrew, Corby, Northamptonshire, NN18 8FD (GB)
(74) Representative: Howick, Nicholas Keith

(56) References cited:
- WO-A-2008/110773
- GB-A- 1 002 942
- GB-A- 1 003 183
- GB-A- 2 118 031
- US-A- 3 583 665
- US-A- 3 985 388
- US-A1- 2007 007 807

## Description

The present invention relates to ensuring that the movement of a body relative to first and second guides is synchronised so that the body does not jam as it slides, due to misalignment of the body relative to the tracks.

PCT/GB2008/000817, which was not yet published at the time of filing this application, discloses movable load surfaces for the interior of a vehicle and particularly variable height load surfaces in the boot or trunk of a vehicle. In particular, there is disclosed a movable load surface for the interior of a vehicle comprising: a pair of spaced apart tracks; a pair of slidable members each supported by one of the tracks; a locking mechanism for locking at least one of the slidable members in a plurality of locking positions relative to the tracks; and a load floor connected to the slidable members. The load floor is pivotally connected to the slidable members via a bar which is rotatable relative to the load floor. The bar is used to ensure the movement of the two slidable members is synchronised. The bar has a square cross section. A pinion is mounted at each end of the bar; and a pair of racks is provided, wherein each of the pair of racks is mounted parallel to one of the pair of tracks with one of the pinions meshing with each of the pair of racks, such that movement of the slidable members within the tracks causes each pinion to move along its respective rack. This arrangement ensures movement of the two slidable members is synchronised and no jamming of the members due to misalignment of the slidable members within the tracks will occur.

A rack & pinion mechanism is a fairly complex arrangement and requires tight tolerances.

US 3,583,665 closest prior art discloses a vehicle seat having a sliding support according to the preamble of claim 1.

There is a need for an improved, simplified mechanism for ensuring that the movement of a body relative to first and second tracks is synchronised.

The present invention addresses this need by providing a sliding support comprising:
a first support;
a first guide slot fixed relative to the first support;
a second support;
a second guide slot fixed relative to the second support, wherein the second guide slot is spaced apart from and parallel to the first guide slot;
a body slidably mounted relative to the first and second guide slots and having a first end which extends through the first guide slot, and a second end which extends through the second guide slot, wherein the body (12) comprises one or more bars rigidly connected to one another;
a first linkage connecting the first end of the body to the first support; and
a second linkage connecting the second end of the body to the second support, characterised in that:
   the first linkage is fixedly connected to the first end of the body, and rotatably connected to the first support; and
   the second linkage is fixedly connected to the second end of the body, and rotatably connected to the second support.

Accordingly, the first and second linkages ensure that rotation, and consequently movement, of the first end of the body is synchronised with rotation, and consequently movement, of the second end of the body. Therefore, movement of the body in each guide slot is synchronised, and jamming is prevented.

In principle, the anti-racking works by making the body rotate throughout its travel along the guide slots so that a particular state of rotation of the body corresponds to a particular position in the guide slots. One end of the body travelling more than the other end is prevented by the body resisting the rotation that this would induce. The more the body rotates through its travel, the more rotation would be induced by any end-to-end mismatch, thus leading to better synchronisation.

In a first embodiment, the first linkage may comprise a first bar having a first end and a second end, and a second bar having a first end and a second end, wherein the first end of the first bar is rotatably connected to the first support, the second end of the first bar is rotatably connected to the first end of the second bar, and the second end of the second bar is fixedly connected to the first end of the body. The second end of the second bar being fixedly connected to the first end of the body means that the second bar is not rotatable relative to the first end of the body.

One or both of the first bar and the second bar may be straight. Similarly, one or both of the first bar and the second bar may be curved.

The second linkage may comprise a third bar having a first end and a second end, and a fourth bar having a first end and a second end, wherein the first end of the third bar is rotatably connected to the second support, the second end of the third bar is rotatably connected to the first end of the fourth bar, and the second end of the fourth bar is fixedly connected to the second end of the body. The second end of the fourth bar being fixedly connected to the second end of the body means that the fourth bar is not rotatable relative to the second end of the body.

One or both of the third bar and the fourth bar may be straight. Similarly, one or both of the third bar and the fourth bar may be curved.

The first end of the first bar may be connected to the first support close to an end of the first guide slot, and the first end of the third bar may be connected to the second support close to an end of the second guide slot.

Alternatively, the first end of the first bar may be connected to the first support close to a centre of the first guide slot, and the first end of the third bar may be connected to the second support close to a centre of the second guide slot.

The first and second guide slots may be shaped to include a plurality of locking slots. For example, the first and second guide slots may be C or E-shaped.

Connecting the first bar and third bar to the supports close to the end or centre of the guide slots ensures that rotation of the body is maximised in the parts of the guide slots where synchronisation is most important, i.e. close to the locking slots. This prevents one end of the body locking whilst the other is still free.

In an alternative embodiment, the first linkage may comprise a first arm rotatably and slidably connected to the first support, and fixedly connected to the first end of the body.

The first arm may be straight or curved.

The second linkage may comprise a second arm rotatably and slidably connected to the second support, and fixedly connected to the second end of the body.

The second arm may be straight or curved.

In particular, the first linkage may comprise a first arm having a first end which is fixedly connected to the first end of the body, and having a first slot along the first arm. The first end of the first arm being fixedly connected to the first end of the body means that the first arm is not rotatable relative to the first end of the body. The first support may include a first pivot which extends through the first slot in the first arm so that as the first arm rotates about the first pivot and the first pivot slides within the first slot, the first end of the first arm and the first end of the body are guided along the first guide slot.

The second linkage may comprise a second arm having a first end which is fixedly connected to the second end of the body, and having a second slot along the second arm. The first end of the second arm being fixedly connected to the second end of the body means that the second arm is not rotatable relative to the second end of the body. The second support may include a second pivot which extends through the second slot in the second arm so that as the second arm rotates about the second pivot and the second pivot slides within the second slot, the first end of the second arm and the second end of the body are guided along the second guide slot.

Since the first and second ends of the body are rigidly connected to one another, rotation of one end of the body leads to a corresponding rotation of the other end of the body. Consequently, movement of the ends of the body along the guide slots is synchronised.

The first and second pivots may be mounted on the first and second supports close to an end of the respective guide slots. Alternatively, the first and second pivots may be mounted on the first and second supports close to a centre of the respective guide slots. In order to maximise rotation of the body relative to the guide slots, it is preferable to position the first and second pivots close to the centre of the respective guide slots.

The first and second guide slots may be shaped to include a plurality of locking slots. For example, the first and second guide slots may be C or E-shaped.

Mounting the pivots close to the end or centre of the guide slots ensures that rotation of the body is maximised in the parts of the guide slots where synchronisation is most important, i.e. close to the locking slots. This prevents one end of the body locking whilst the other is still free.

The sliding supports of the present invention may further be provided with a constant force spring acting between one of the first and second supports and the corresponding first and second end of the body, for providing a force to assist movement of the body along the guide slots.

The sliding support may be arranged so that the guide slots are arranged in a substantially vertical configuration. The constant force spring can be positioned to act between a position close to an upper end of the guide slot, and the respective end of the body. Such a constant force spring assists the user in moving the body to a higher level without having to pull with a force equal to the whole weight of the body. Moreover, the constant force spring prevents the body from rapidly sliding down the guide slots to a lower level; the constant force spring counteracts the weight of the body so that the user applies a small force downwards to cause downward motion of the body. The constant force spring may also ensure a consistent effort is required to move the body up and down the guide slots.

When the guide slots include a plurality of locking slots, the constant force spring may also be positioned to pull the ends of the body into the respective locking slots. In particular, when each guide slot comprises a substantially vertical slot having one or more locking slots extending from one side of the vertical slot in a substantially horizontal direction, the constant force spring may be arranged to act between a first position, and the respective end of the body. The first position may be located vertically close to an upper end of the guide slot and displaced horizontally from the vertical slot towards the same side of the vertical slot as the locking slots extend. Consequently, the constant force spring acts to lift the body and pull the ends of the body into the locking slots. The spring may also act to ensure the body remains locked in place during vibration or sudden movement. The spring may also prevent rattling of the body in the locking slots and may ensure that the body automatically locks into a locking slot if the body is dropped.

The guide slots may be arranged vertically with the upper end of each guide slot displaced horizontally relative to the lower end of the guide slot. Consequently, as the body travels along the guide slot, the body moves both horizontally and vertically. Angling the direction of travel in such a way makes the operation of the system more intuitive and ergonomic. The operator can pull the body up the guide slots and push the body down the guide slots in an intuitive direction which is aligned with the natural movement of a user's shoulder.

The body may comprise a single rigid bar. Alternatively, the body may comprise two bars rigidly connected to one another at one of their respective ends by a connector. The one or more bars may comprise cylindrical tubes or rods. The connector may comprise a moulded connector that allows the two bars to be screwed together. By forming the body in two pieces, the two sides of the support can be installed individually, for example, behind trim surfaces, and then connected together. This set-up offers ease of assembly in combination with the anti-racking functionality provided by the rigid linkage.

The sliding support of the present invention may be used to support a load floor. The body may comprise at least one bar, and the load floor may be pivotally connected to the body. At least one bush may be mounted between the body and the load floor so that the load floor can be rotated relative to the body from a first position to a second position. The one or more bars may further be mounted within one or more torsion tubes and the load floor may be pivotally mounted on the one or more torsion tubes. The torsion tube may be used to avoid excessive loading of the one or more bars so that the ends of the one or more bars can slide freely in the guide slots.

In use, the sliding support may be positioned within a boot or trunk compartment of a vehicle. The boot or trunk compartment is positioned close to the rear of the vehicle. The front of the boot or trunk compartment is the end of the compartment which is closest to the rear of the vehicle, and the rear of the boot or trunk compartment is the end of the compartment which is closest to the front of the vehicle. The guide slots may be positioned towards the rear of the boot or trunk compartment and angled so that the upper end of the guide slots is closer to the front of the boot or trunk compartment. The front end of the load floor is supported by the floor of the boot at the lower level, and by supports formed in the boot or trunk at the higher levels. Angling of the guide slots means that the front end of the load floor can clear the upper supports as the load floor is rotated upwards whilst in its lower position. However, as the load floor is raised along the guide slot, it moves up and forwards towards the supports at the front of the boot or trunk so that the front end of the load floor can be supported on the upper supports.

By way of example, several embodiments of sliding support assemblies according to the invention will now be described with reference to the accompanying drawings, in which:-
Figures 1a, b and c are perspectives views of part of a sliding support according to a first embodiment of the invention, in three different positions;
Figures 2a, b and c are perspective views of part of a sliding support according to a second embodiment of the invention, in three different positions;
Figures 3a, b and c are perspective views of part of a sliding support according to a third embodiment of the invention, in three different positions;
Figures 4a, b and c are perspective views of part of a sliding support according to a fourth embodiment of the invention, in three different positions;
Figures 5a, b and c are perspective views of part of a sliding support according to a fifth embodiment of the invention, in three different positions;
Figures 6a, b and c are perspective views of part of a sliding support according to a sixth embodiment of the invention, in three different positions;
Figures 7a and b are perspective views of part of a sliding support according to a seventh embodiment of the invention from two different directions;
Figures 8a, b and c are perspective views of part of a sliding support according to an eighth embodiment of the invention, in three different positions;
Figures 9a, b and c are perspective views of part of a sliding support according to a ninth embodiment of the invention, in three different positions; and
Figure 10 shows a side view of a load floor incorporating a sliding support according to the present invention.

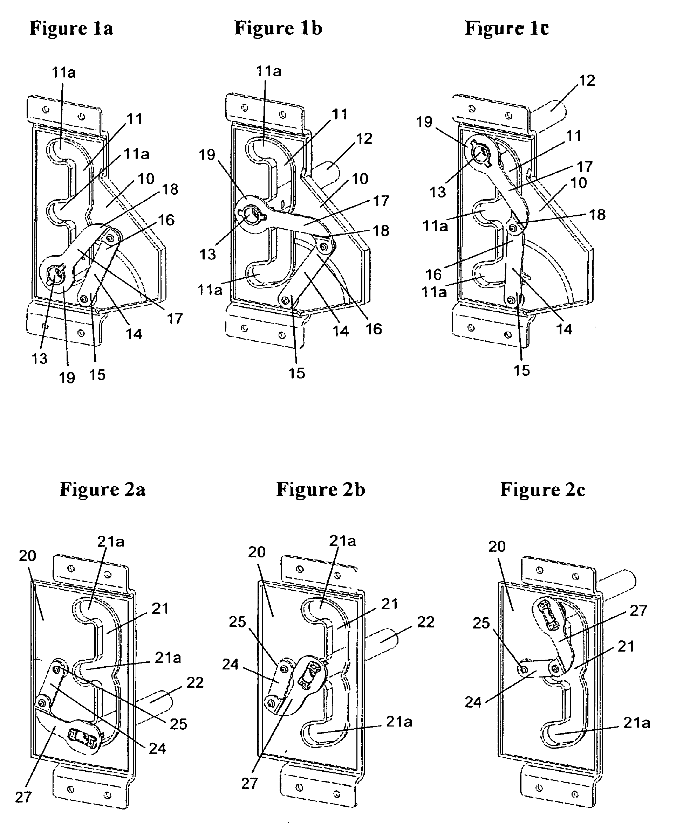

Figures 1a, b and c show part of a sliding support according to a first embodiment of the invention. The sliding support includes a first support 10, a first guide slot 11 formed in the first support 10, a rod 12 slidably mounted relative to the first guide slot 11 and having a first end 13 which extends through the first guide slot 11, and a first linkage connecting the first end 13 of the rod 12 to the first support 10. Only a short end portion of the rod 12 is shown in the figures. The first linkage comprises a first bar 14 having a first end 15 and a second end 16, and a second bar 17 having a first end 18 and a second end 19, wherein the first end 15 of the first bar 14 is rotatably connected to the first support 10, the second end 16 of the first bar 14 is rotatably connected to the first end 18 of the second bar 17, and the second end 19 of the second bar 17 is fixedly connected to the first end 13 of the rod 12. The second end 19 of the second bar 17 being fixedly connected to the first end 13 of the rod 12 means that the second bar 17 is not rotatable relative to the rod 12.

The sliding support 10 also includes a second support, guide slot and linkage (not shown) which is a mirror image of the first support, guide slot and linkage. The second guide slot is spaced apart from and parallel to the first guide slot 11. The rod 12 is slidably mounted relative to the second guide slot and has a second end which extends through the second guide slot.

The first and second linkages ensure that rotation, and consequently movement, of the first end 13 of the rod 12 is synchronised with rotation, and consequently movement, of the second end of the rod. Therefore, movement of the rod in each guide slot is synchronised, and jamming is prevented.

The first bar 14 is straight and the second bar 17 is curved. The first end 15 of the first bar 14 is connected to the first support 10 close to a lower end of the first guide slot 11.

The guide slots 11 are E-shaped and include a plurality of locking slots 11a. Figure 1a shows the positions of the various components when the rod 12 is positioned in the lowest locking slot 11a. Figure 1b shows the positions of the various components when the rod 12 is positioned in the middle locking slot 11a, and figure 1c shows the positions of the various components when the rod 12 is positioned in the highest locking slot 11a.

Figures 2a, b and c show part of a sliding support according to a second embodiment of the invention. The sliding support is the same as that shown in figures 1a, b and c except that the first end 25 of the first bar 24 in figures 2a, b and c is connected to the first support 20 close to the centre of the guide slot 21.

The guide slots 11 are E-shaped and include three locking slots 11a so that the bar can be locked at three different levels.

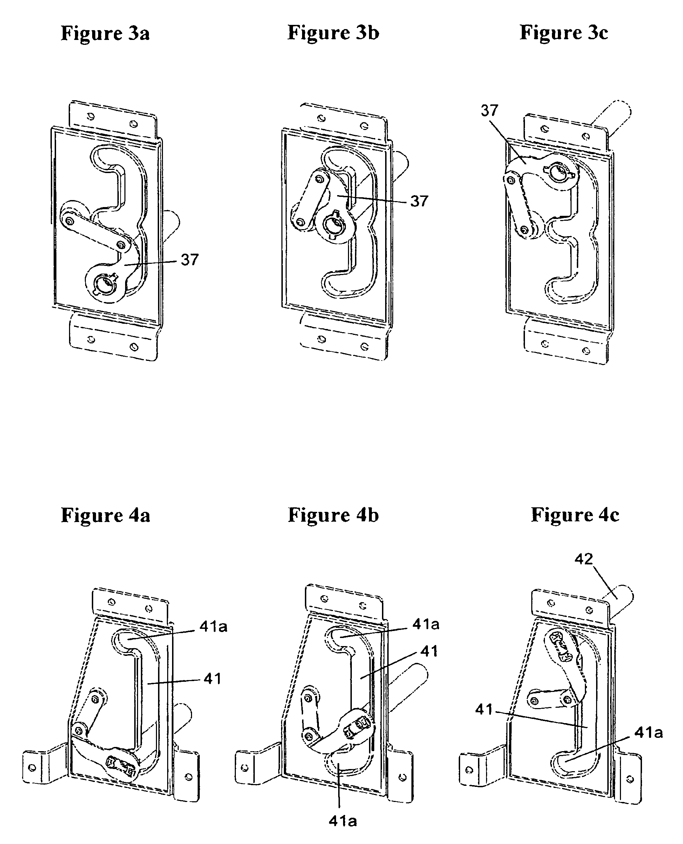

Figures 3a, b and c show part of a sliding support according to a third embodiment of the invention. The sliding support is the same as that shown in figures 2a, b and c except that the second bar 37 in figures 3a, b and c is curved in the opposite direction to the second bar 27 in figures 2a, b and c.

Figures 4a, b and c show part of a sliding support according to a fourth embodiment of the invention. The sliding support is the same as that shown in figures 2a, b and c except that the guide slot 41 is C-shaped rather than E-shaped and consequently includes two locking slots 41a as opposed to the three locking slots shown in figures 2a, b and c. Consequently, the rod 22 of the second embodiment can be locked at three different levels whereas the rod 42 of the fourth embodiment can be locked at two different levels. Figure 4a shows the positions of the various components when the rod 42 is positioned in the lowest locking slot 41a. Figure 4b shows the positions of the various components when the rod 42 is positioned between the locking slots 41a, and figure 4c shows the positions of the various components when the rod 42 is positioned in the highest locking slot 41a.

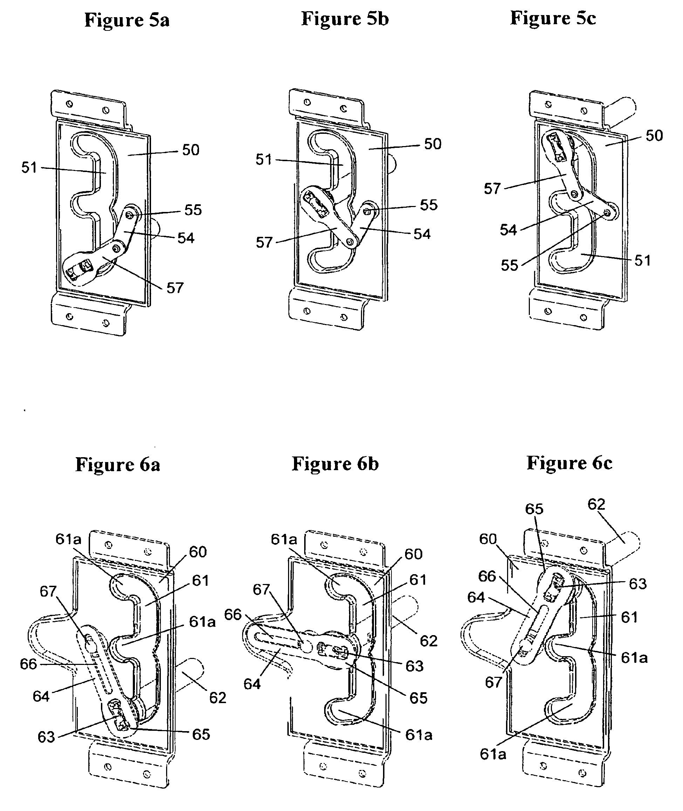

Figures 5a, b and c show part of a sliding support according to a fifth embodiment of the invention. The sliding support is the same as that shown in figures 2a, b and c except that the second bar 57 in figures 5a, b and c is straight whereas the second bar 27 in figures 2a, b and c is curved, and that the first end 55 of the first bar 54 in figures 5a, b and c is connected to the first support 50 on the opposite side of the guide slot 51 to that shown in figures 2a, b and c.

Figures 6a, b and c show part of a sliding support according to a sixth embodiment of the invention. The sliding support includes a first support 60, a first guide slot 61 formed in the first support 60, a rod 62 slidably mounted relative to the first guide slot 61 and having a first end 63 which extends through the first guide slot 61, and a first linkage connecting the first end 63 of the rod 62 to the first support 60. The first linkage comprises a first arm 64 fixedly connected to the first end 63 of the rod 62, and rotatably and slidably connected to the first support 60. The first arm 64 is straight.

The first arm 64 has a first end 65 which is fixedly connected to the first end 63 of the rod 62, and a first slot 66 along the length of the first arm 64. The first support 60 includes a first pivot 67 which extends through the first slot 66 in the first arm 64 so that as the first arm 64 rotates about the first pivot 67 and the first pivot 67 slides within the first slot 66. The first end 65 of the first arm 64, and the first end 63 of the body 62, are guided along the first guide slot 61.

The sliding support also includes a second support, guide slot and linkage (not shown) which are a mirror image of the first support 60, guide slot 61 and linkage 64. The second guide slot is spaced apart from and parallel to the first guide slot 61. The rod 62 is slidably mounted relative to the second guide slot and has a second end which extends through the second guide slot.

Since the first and second ends of the rod 62 are rigidly connected to one another, rotation of one end of the rod 62 leads to a corresponding rotation of the other end of the rod 62. Consequently, movement of the ends of rod 62 along the guide slots is synchronised.

The first pivot 67 is mounted on the first support 60 close to a centre of the guide slot 61. The guide slots are E-shaped and consequently each include three locking slots 61a.

Figure 6a shows the positions of the various components when the rod 62 is positioned in the lowest locking slot 61a. Figure 6b shows the positions of the various components when the rod 62 is positioned in the middle locking slot 61a, and figure 6c shows the positions of the various components when the rod 62 is positioned in the highest locking slot 61a.

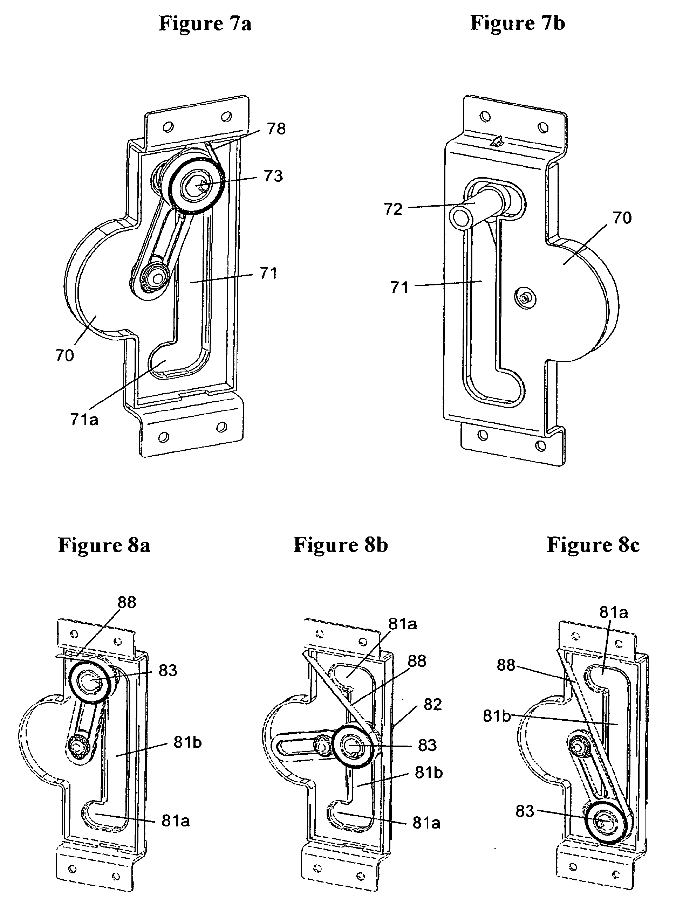

Figures 7a and b show part of a sliding support according to a seventh embodiment of the invention. The sliding support is the same as that shown in figures 6a, b and c except that the guide slot 71 is C-shaped rather than E-shaped and consequently includes two locking slots 71a as opposed to the three locking slots 61a shown in figures 6a, b and c. Consequently, the rod 62 of the sixth embodiment can be locked at three different levels whereas the rod 72 of the seventh embodiment can be locked at two different levels. Figure 7a and b both show the positions of the various components when the rod 72 is positioned in the highest locking slot 71a. Figure 7a is shown from one side of the support 70, and figure 7b is shown from the opposite side of the support 70.

The seventh embodiment also includes a constant force spring 78 acting between the first support 70 and the first end 73 of the rod 72, for providing a force to assist movement of the rod 72 along the guide slots 71.

The guide slots 71 are arranged in a substantially vertical configuration. The constant force spring 78 is positioned to act between a position close to an upper end of the guide slot 71, and the first end 73 of the rod 72. The constant force spring 78 assists a user in moving the rod to a higher level without having to pull with a force equal to the whole weight of the rod and any body attached to the rod. Moreover, the constant force spring 78 prevents the rod from rapidly sliding down the guide slots 71 to a lower level; the constant force spring 78 counteracts the weight of the rod 72 so that the user applies a small force downwards to cause downward motion of the rod. The constant force spring 78 may also ensure a consistent effort is required to move the rod up and down the guide slots 71.

Figures 8a, b and c show part of a sliding support according to a eighth embodiment of the invention. The sliding support is the same as that shown in figures 7a, b and c except that the constant force spring 88 is positioned to pull the ends 83 of the rod 82 into the respective locking slots 81a. In particular, each guide slot comprises a substantially vertical slot 81b having two locking slots 81a extending from one side of the vertical slot 81b in a substantially horizontal direction, the constant force spring 88 is arranged to act between a first position, and an end 83 of the rod 82. The first position is located vertically close to an upper end of the guide slot and displaced horizontally from the vertical slot 81b towards the same side of the vertical slot 81b as the locking slots 81a extend. Consequently, the constant force spring 88 acts to lift the rod 82 and pull the ends 83 of the rod 82 into the locking slots 81a. The spring 88 may also acts to ensure the rod 82 remains locked in place during vibration or sudden movement. The spring 88 may also prevents rattling of the rod 82 in the locking slots 81a and may ensure that the rod 82 automatically locks into a locking slot 81a if the rod 82 is dropped.

Figure 8a shows the positions of the various components when the rod 82 is positioned in the highest locking slot 81a. Figure 8b shows the positions of the various components when the rod 82 is positioned between the locking slots 81 a, and figure 8c shows the positions of the various components when the rod 82 is positioned in the highest locking slot 81a.

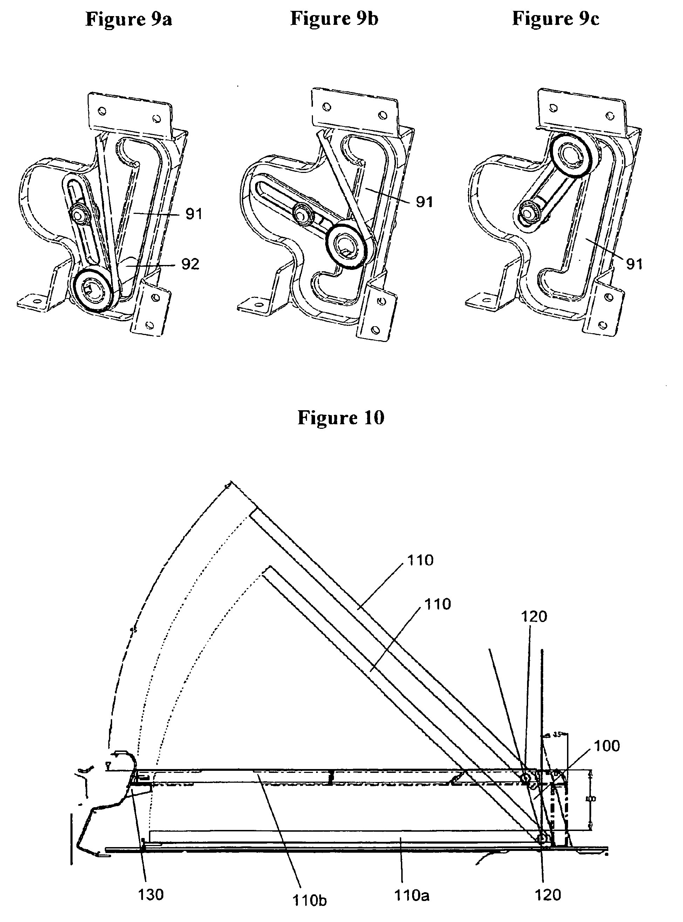

Figures 9a, b and c show part of a sliding support according to a ninth embodiment of the invention. The sliding support is the same as that shown in figures 8a, b and c except that the upper end of each guide slot 91 is displaced horizontally relative to the lower end of the guide slot 91. Consequently, as the rod 92 travels along the guide slot 91, the rod 92 moves both horizontally and vertically. Angling the direction of travel in such a way makes the operation of the system more intuitive and ergonomic. The operator can pull the rod 92 up the guide slots 91 and push the rod 92 down the guide slots 91 in an intuitive direction which is aligned with the natural movement of a user's shoulder.

Figure 10 shows an application of a sliding support 100 according to the present invention to support a load floor 110 in a boot or trunk of a vehicle. The load floor 110 is pivotally connected to a rod 120 which is guided along the guide slots. When the load floor 110 is positioned in a lower level (position 110a), the rod is held within a lower locking slot of the guide slot. In order to move the load floor 110 to an upper level (position 110b), the load floor 110 is rotated about the rod 120 and slid along the guide slot until it reaches an upper locking slot. The load floor is then rotated about the rod 120 in the opposite direction. The guide slot is positioned at the rear of the boot or trunk and angled so that the upper end of the guide slot is closer to the front of the boot or trunk than the lower end of the guide slot. This arrangement ensures that the load floor 110 can be raised without hitting the upper support 130, on which the front of the load floor 110 rests when it is in its upper position 110b.

It can be seen that the sliding support of the present invention ensures that a body can be moved relative to a pair of guide slots, in synchronisation, and without jamming.

It will be appreciated that the embodiment described is by way of example only, and that alterations or modifications may be made within the scope of the invention as defined in the following claims.

## Claims

1. A sliding support comprising:
a first support (10);
a first guide slot (11) fixed relative to the first support (10);
a second support;
a second guide slot fixed relative to the second support, wherein the second guide slot is spaced apart from and parallel to the first guide slot (11);
a body (12) slidably mounted relative to the first and second guide slots and having a first end (13) which extends through the first guide slot (11), and a second end which extends through the second guide slot, wherein the body (12) comprises one or more bars rigidly connected to one another;
a first linkage connecting the first end of the body (12) to the first support (10); and
a second linkage connecting the second end of the body (12) to the second support,
**characterised in that**:
the first linkage is fixedly connected to the first end of the body (12), and rotatably connected to the first support (10); and
the second linkage is fixedly connected to the second end of the body (12), and rotatably connected to the second support.

2. The sliding support of claim 1 wherein:
the first linkage comprises:
a first bar (14) having a first end (15) and a second end (16), and
a second bar (17) having a first end (18) and a second end (19), wherein the first end (15) of the first bar (14) is rotatably connected to the first support (10),
the second end (16) of the first bar (14) is rotatably connected to the first end (18) of the second bar (17), and
the second end (19) of the second bar (17) is fixedly connected to the first end (13) of the body (12); and
the second linkage comprises:
a third bar having a first end and a second end, and
a fourth bar having a first end and a second end, wherein
the first end of the third bar is rotatably connected to the second support,
the second end of the third bar is rotatably connected to the first end of the fourth bar, and
the second end of the fourth bar is fixedly connected to the second end of the body (12).

3. The sliding support of claim 2 wherein:
the first end (15) of the first bar (14) is connected to the first support (10) close to an end of the first guide slot (11), and
the first end of the third bar is connected to the second support close to an end of the second guide slot.

4. The sliding support of claim 2 wherein:
the first end (25) of the first bar (24) is connected to the first support (20) close to a centre of the first guide slot (21), and
the first end of the third bar is connected to the second support close to a centre of the second guide slot.

5. The sliding support of claim 1, wherein:
the first linkage comprises a first arm (64) rotatably and slidably connected to the first support (60), and fixedly connected to the first end (63) of the body (62), and
the second linkage comprises a second arm rotatably and slidably connected to the second support, and fixedly connected to the second end of the body (62).

6. The sliding support of claim 5 wherein the first and second arms are straight.

7. The sliding support of claim 5 wherein the first and second arms are curved.

8. The sliding support of any of claims 5 to 7 wherein:
the first linkage comprises a first arm (64) having:
a first end (65) which is fixedly connected to the first end (63) of the body (62), and
a first slot (66) along the length of the first arm (64); and
the first support (60) includes a first pivot (67) which extends through the first slot (66) in the first arm (64) such that the first arm (64) is rotatably and slidably mounted about the first pivot (67); and
the second linkage comprises a second arm having;
a first end which is fixedly connected to the second end of the body (62), and
a second slot along the length of the second arm; and
the second support includes a second pivot which extends through the second slot in the second arm such that the second arm is rotatably and slidably mounted about the second pivot.

9. The sliding support of claim 8 wherein the first and second pivots are mounted on the first and second supports close to an end of the respective guide slots.

10. The sliding support of claim 8 wherein the first and second pivots are mounted on the first and second supports close to a centre of the respective guide slots.

11. The sliding support of any preceding claim, further comprising a constant force spring (78) acting between one of the first and second supports (70) and the corresponding first and second end (73) of the body (72), for providing a force to assist movement of the body (72) along the guide slots (71).

12. The sliding support of claim 11 wherein the guide slots (71) are arranged in a substantially vertical configuration, and the constant force spring (78) is positioned to act between a position close to an upper end of the guide slot (71), and the respective end of the body (72).

13. The sliding support of claim 11 wherein the first and second guide slots are shaped to include a plurality of locking slots (81a), and the constant force spring (88) is positioned to pull the ends of the body (82) into the respective locking slots (81a).

14. The sliding support of claim 13, wherein:
each guide slot comprises a substantially vertical slot (81b) having one or more locking slots (81a) extending from one side of the vertical slot (81b) in a substantially horizontal direction, and
the constant force spring (88) is arranged to act between a first position, and the respective end of the body (82),
the first position being located vertically close to an upper end of the guide slot and displaced horizontally from the vertical slot (81a) towards the same side of the vertical slot (81a) as the locking slots (81b) extend.

15. A load floor (110) comprising:
the sliding support of any preceding claim, wherein the body further comprises a load floor (110) pivotally connected to the at least one bar (120).

## Patentansprüche

1. Gleitstütze, umfassend:
eine erste Stütze (10);
einen ersten Führungsschlitz (11), der in Bezug auf die erste Stütze (10) fixiert ist;
eine zweite Stütze;
einen zweiten Führungsschlitz, der in Bezug auf die zweite Stütze fixiert ist, wobei der zweite Führungsschlitz von dem ersten Führungsschlitz (11) beabstandet und dazu parallel ist;
einen Körper (12), der gleitfähig in Bezug auf den ersten und den zweiten Führungsschlitz angebracht ist und ein erstes Ende (13), das sich durch den ersten Führungsschlitz (11) erstreckt, und ein zweites Ende, das sich durch den zweiten Führungsschlitz erstreckt, aufweist, wobei der Körper (12) eine oder mehrere Stangen aufweist, die starr miteinander verbunden sind;
eine erste Verbindung, die das erste Ende des Körpers (12) mit der ersten Stütze (10) verbindet; und
eine zweite Verbindung, die das zweite Ende des Körpers (12) mit der zweiten Stütze verbindet,
**dadurch gekennzeichnet, dass**
die erste Verbindung fest mit dem ersten Ende des Körpers (12) verbunden ist, und drehbar mit der ersten Stütze (10) verbunden ist; und
die zweite Verbindung fest mit dem zweiten Ende des Körpers (12) verbunden ist, und drehbar mit der zweiten Stütze verbunden ist.

2. Gleitstütze nach Anspruch 1, wobei:
die erste Verbindung
eine erste Stange (14) mit einem ersten Ende (15) und einem zweiten Ende (16), und
eine zweite Stange (17) mit einem ersten Ende (18) und einem zweiten Ende (19)
umfasst, wobei
das erste Ende (15) der ersten Stange (14) drehbar mit der ersten Stütze (10) verbunden ist,
das zweite Ende (16) der erste Stange (14) drehbar mit dem ersten Ende (18) der zweiten Stange (17) verbunden ist, und
das zweite Ende (19) der zweiten Stange (17) fest mit dem ersten Ende (13) des Körpers (12) verbunden ist; und
die zweite Verbindung
eine dritte Stange mit einem ersten Ende und einem zweiten Ende, und
eine vierte Stange mit einem ersten Ende und einem zweiten Ende
umfasst, wobei
das erste Ende der dritten Stange drehbar mit der zweiten Stütze verbunden ist,
das zweite Ende der dritten Stange drehbar mit dem ersten Ende der vierten Stange verbunden ist, und
das zweite Ende der vierten Stange fest mit dem zweiten Ende des Körpers (12) verbunden ist.

3. Gleitstütze nach Anspruch 2, wobei:
das erste Ende (15) der ersten Stange (14) nahe an einem Ende des ersten Führungsschlitzes (11) mit der ersten Stütze (10) verbunden ist, und
das erste Ende der dritten Stange nahe an einem Ende des zweiten Führungsschlitzes mit der zweiten Stütze verbunden ist.

4. Gleitstütze nach Anspruch 2, wobei:
das erste Ende (25) der ersten Stange (24) nahe an einer Mitte des ersten Führungsschlitzes (21) mit der ersten Stütze (20) verbunden ist, und
das erste Ende der dritten Stange nahe an einer Mitte des zweiten Führungsschlitzes mit der zweiten Stütze verbunden ist.

5. Gleitstütze nach Anspruch 1, wobei:
die erste Verbindung einen ersten Arm (64) umfasst, der drehbar und gleitfähig mit der ersten Stütze (60) verbunden ist, und fest mit dem ersten Ende (63) des Körpers (62) verbunden ist, und
die zweite Verbindung einen zweiten Arm umfasst, der drehbar und gleitfähig mit der zweiten Stütze verbunden ist, und fest mit dem zweiten Ende des Körpers (62) verbunden ist.

6. Gleitstütze nach Anspruch 5, wobei der erste und der zweite Arm gerade sind.

7. Gleitstütze nach Anspruch 5, wobei der erste und der zweite Arm gebogen sind.

8. Gleitstütze nach einem der Ansprüche 5 bis 7, wobei:
die erste Verbindung einen ersten Arm (64) umfasst, der
ein erstes Ende (65), das fest mit dem ersten Ende (63) des Körpers (62) verbunden ist, und
einen ersten Schlitz (66) entlang der Länge des ersten Arms (64)
aufweist; und
die erste Stütze (60) einen ersten Drehzapfen (67) umfasst, der sich so durch den ersten Schlitz (66) in dem ersten Arm (64) erstreckt, dass der erste Arm (64) drehbar und gleitfähig um den ersten Drehzapfen (67) angebracht ist; und
die zweite Verbindung einen zweiten Arm umfasst, der
ein erstes Ende, das fest mit dem zweiten Ende des Körpers (62) verbunden ist, und
einen zweiten Schlitz entlang der Länge des zweiten Arms
aufweist; und
die zweite Stütze einen zweiten Drehzapfen umfasst, der sich so durch den zweiten Schlitz in dem zweiten Arm erstreckt, dass der zweite Arm drehbar und gleitfähig um den zweiten Drehzapfen angebracht ist.

9. Gleitstütze nach Anspruch 8, wobei der erste und der zweite Drehzapfen nahe an einem Ende des jeweiligen Führungsschlitzes an der ersten bzw. der zweiten Stütze angebracht sind.

10. Gleitstütze nach Anspruch 8, wobei der erste und der zweite Drehzapfen nahe an einer Mitte des jeweiligen Führungsschlitzes an der ersten bzw. der zweiten Stütze angebracht sind.

11. Gleitstütze nach einem der vorhergehenden Ansprüche, ferner umfassend eine Konstantkraftfeder (78), die zwischen der ersten und der zweiten Stütze (70) und dem entsprechenden ersten und zweiten Ende (73) des Körpers (72) wirkt, um eine Kraft zur Unterstützung der Bewegung des Körpers (72) entlang der Führungsschlitze (71) bereitzustellen.

12. Gleitstütze nach Anspruch 11, wobei die Führungsschlitze (71) in einer im Wesentlichen senkrechten Gestaltung angeordnet sind, und die Konstantkraftfeder (78) so positioniert ist, dass sie zwischen einer Position nahe an einem oberen Ende des Führungsschlitzes (71) und dem entsprechenden Ende des Körpers (72) wirkt.

13. Gleitstütze nach Anspruch 11, wobei der erste und der zweite Führungsschlitz so geformt sind, dass sie mehrere Verriegelungsschlitze (81a) umfassen, und die Konstantkraftfeder (88) so positioniert ist, dass sie die Enden des Körpers (82) in die entsprechenden Verriegelungsschlitze (81a) zieht.

14. Gleitstütze nach Anspruch 13, wobei:
jeder Führungsschlitz einen im Wesentlichen senkrechten Schlitz (81b) umfasst, der einen oder mehrere Verriegelungsschlitze (81a) aufweist, der bzw. die sich in einer im Wesentlichen waagerechten Richtung von einer Seite des senkrechten Schlitzes (81b) erstreckt bzw. erstrecken, und
die Konstantkraftfeder (88) so angeordnet ist, dass sie zwischen einer ersten Position und dem entsprechenden Ende des Körpers (82) wirkt,
wobei sich die erste Position senkrecht nahe an einem oberen Ende des Führungsschlitzes befindet und waagerecht von dem senkrechten Schlitz (81a) zu der gleichen Seite des senkrechten Schlitzes (81a) verschoben ist, zu der sich die Verriegelungsschlitze (81b) erstrecken.

15. Ladefläche (110), umfassend:
die Gleitstütze nach einem der vorhergehenden Ansprüche, wobei der Körper ferner eine Ladefläche (110) umfasst, die schwenkbar mit der wenigstens einen Stange (120) verbunden ist.

## Revendications

1. Support coulissant comprenant :
un premier support (10) ;
une première fente de guidage (11) fixée par rapport au premier support (10) ;
un deuxième support ;
une deuxième fente de guidage fixée par rapport au deuxième support, la deuxième fente de guidage étant espacée de la première fente de guidage (11) et étant parallèle à celle-ci ;
un corps (12) monté de manière coulissante par rapport aux première et deuxième fentes de guidage et ayant une première extrémité (13) qui s'étend à travers la première fente de guidage (11) et une deuxième extrémité qui s'étend à travers la deuxième fente de guidage, le corps (12) comprenant une ou plusieurs barres reliées rigidement l'une à l'autre ;
une première liaison reliant la première extrémité du corps (12) au premier support (10) ;
et
une deuxième liaison reliant la deuxième extrémité du corps (12) au deuxième support,
**caractérisé en ce que** :
la première liaison est reliée fixement à la première extrémité du corps (12) et est reliée de manière rotative au premier support (10) ; et
la deuxième liaison est reliée fixement à la deuxième extrémité du corps (12) et est reliée de manière rotative au deuxième support.

2. Support coulissant selon la revendication 1, dans lequel :
la première liaison comprend :
une première barre (14) ayant une première extrémité (15) et une deuxième extrémité (16), et une deuxième barre (17) ayant une première extrémité (18) et une deuxième extrémité (19), la première extrémité (15) de la première barre (14) étant reliée de manière rotative au premier support (10),
la deuxième extrémité (16) de la première barre (14) étant reliée de manière rotative à la première extrémité (18) de la deuxième barre (17), et
la deuxième extrémité (19) de la deuxième barre (17) étant reliée fixement à la première extrémité (13) du corps (12) ; et
la deuxième liaison comprend :
une troisième barre ayant une première extrémité et une deuxième extrémité, et
une quatrième barre ayant une première extrémité et une deuxième extrémité,
la première extrémité de la troisième barre étant reliée de manière rotative au deuxième support,
la deuxième extrémité de la troisième barre étant reliée de manière rotative à la première extrémité de la quatrième barre, et
la deuxième extrémité de la quatrième barre étant reliée de manière fixe à la deuxième extrémité du corps (12).

3. Support coulissant selon la revendication 2, dans lequel :
la première extrémité (15) de la première barre (14) est connectée au premier support (10) à proximité d'une extrémité de la première fente de guidage (11), et
la première extrémité de la troisième barre est connectée au deuxième support à proximité d'une extrémité de la deuxième fente de guidage.

4. Support coulissant selon la revendication 2, dans lequel :
la première extrémité (25) de la première barre (24) est reliée au premier support (20) à proximité d'un centre de la première fente de guidage (21), et
la première extrémité de la troisième barre est reliée au deuxième support à proximité d'un centre de la deuxième fente de guidage.

5. Support coulissant selon la revendication 1, dans lequel :
la première liaison comprend un premier bras (64) relié de manière rotative et coulissante au premier support (60), et relié fixement à la première extrémité (63) du corps (62), et
la deuxième liaison comprend un deuxième bras relié de manière rotative et coulissante au deuxième support, et relié de manière fixe à la deuxième extrémité du corps (62).

6. Support coulissant selon la revendication 5, dans lequel les premier et deuxième bras sont droits.

7. Support coulissant selon la revendication 5, dans lequel les premier et deuxième bras sont courbes.

8. Support coulissant selon l'une quelconque des revendications 5 à 7, dans lequel :
la première liaison comprend un premier bras (64) ayant :
une première extrémité (65) qui est reliée de manière fixe à la première extrémité (63) du corps (62), et
une première fente (66) le long de la longueur du premier bras (64) ; et
le premier support (60) comporte un premier pivot (67) qui s'étend à travers la première fente (66) dans le premier bras (64) de telle sorte que le premier bras (64) soit monté de manière rotative et coulissante autour du premier pivot (67) ; et
la deuxième liaison comprend un deuxième bras ayant :
une première extrémité qui est reliée de manière fixe à la deuxième extrémité du corps (62), et
une deuxième fente le long de la longueur du deuxième bras ; et
le deuxième support comporte un deuxième pivot qui s'étend à travers la deuxième fente dans le deuxième bras de telle sorte que le deuxième bras soit monté de manière rotative et coulissante autour du deuxième pivot.

9. Support coulissant selon la revendication 8, dans lequel les premier et deuxième pivots sont montés sur les premier et deuxième supports à proximité d'une extrémité des fentes de guidage respectives.

10. Support coulissant selon la revendication 8, dans lequel les premier et deuxième pivots sont montés sur les premier et deuxième supports à proximité d'un centre des fentes de guidage respectives.

11. Support coulissant selon l'une quelconque des revendications précédentes, comprenant en outre un ressort de force constante (78) agissant entre l'un des premier et deuxième supports (70) et la première et deuxième extrémité (73), correspondante, du corps (72), pour fournir une force d'assistance au mouvement du corps (72) le long des fentes de guidage (71).

12. Support coulissant selon la revendication 11, dans lequel les fentes de guidage (71) sont agencées dans une configuration substantiellement verticale et le ressort de force constante (78) est positionné de manière à agir entre une position proche d'une extrémité supérieure de la fente de guidage (71) et l'extrémité respective du corps (72).

13. Support coulissant selon la revendication 11, dans lequel les première et deuxième fentes de guidage sont formées de manière à inclure une pluralité de fentes de verrouillage (81a) et le ressort de force constante (88) est positionné de manière à tirer les extrémités du corps (82) dans les fentes de verrouillage respectives (81a).

14. Support coulissant selon la revendication 13, dans lequel :
chaque fente de guidage comprend une fente substantiellement verticale (81b) ayant une ou plusieurs fentes de verrouillage (81a) s'étendant depuis un côté de la fente verticale (81b) dans une direction substantiellement horizontale, et le ressort de force constante (88) est agencé de manière à agir entre une première position, et l'extrémité respective du corps (82),
la première position étant située verticalement à proximité d'une extrémité supérieure de la fente de guidage et déplacée horizontalement depuis la fente verticale (81a) vers le même côté de la fente verticale (81a) que celui le long duquel s'étendent les fentes de verrouillage (81b).

15. Plancher de chargement (110) comprenant :
le support coulissant selon l'une quelconque des revendications précédentes, le corps comprenant en outre un plancher de chargement (110) relié de manière pivotante à l'au moins une barre (120).
